# EUROPEAN PATENT APPLICATION

(11) **EP 1 809 016 A2**
(43) Date of publication of application: **18.07.2007**
(21) Application number: 06122382.2
(22) Date of filing: 16.10.2006
(51) Int. Cl.: H04N 5/00

(54) **Non-standard api-supporting broadcast reception device and function setting method therefor**

(30) Priority: 09.01.2006 KR 20060002445
(71) Applicant: SAMSUNG ELECTRONICS CO., LTD., Suwon-si Gyeonggi-do 442-742 (KR)
(72) Inventor: KIM, Mun-seok, 201, One room, 1039-13, Gyeonggi-do (KR); NAM, Kyung-chul, 203-1706, Hwanggol-maeul, Yeongtong-gu, Suwon-si, Gyeonggi-do (KR); SONG, Yong-chun, 303, 209-63 Maetan 4-dong, Gyeonggi-do (KR); LEE, Doo-hee, 104, 1242-7, Maetan 3-dong, Gyeonggi-do (KR)
(74) Representative: Clark, David James

(57) **Abstract**

A broadcast reception device performing image/sound-related settings. The broadcast reception device includes an application part (110) which executes an application program, a platform part (120) which executes an Application Program Interface (API) for image-related and sound-related settings if the application part calls the image-related and sound-related setting API, and a function module part (130) which implements a function corresponding to the API executed in the platform. If the image-related and sound-related setting API is a non-standard API, the application part (110) directly calls the standard API requesting for a list of the non-standard API, and the platform part (120) provides the non-standard API list to the application part. Accordingly, if the non-standard API is selected out of the list, the platform part (120) executes the selected non-standard API.

## Description

The present invention relates to broadcast reception devices and ato functions setting methods for a broadcast reception device.

The field of digital technologies has been remarkably advanced. Diverse standard specifications have been adopted and used for broadcast reception devices receiving and processing digital broadcast signals. Such standards include the Advanced Common Application Platform (ACAP), Open Cable Application Platform (OCAP), Multimedia Home Platform (MHP), and the like.

According to the standards, diverse application programs are downloaded into a broadcast reception device and perform various services provided by broadcast providers. According to the OCAP specification, an application program named as Xlet is installed and executed in a broadcast reception device. Such an application program is provided with a standard Application Program Interface (API) from the broadcast reception device, and sets functions of the broadcast reception device, related to the various specifications which are defined relating to various kinds of APIs.

However, relevant image-related and sound-related specifications may not be defined. Broadcast reception device makers can therefore independently specify and apply image characteristics APIs related to image, sound characteristics APIs related to sound, and the like.

Therefore, the image-related and sound-related APIs and other non-standard APIs not defined in standard cannot be provided for application programs. Thus, there exists a problem since the functions corresponding to the non-standard APIs cannot be set.

Illustrative, non-limiting embodiments of the present invention may address the above disadvantages, and other disadvantages not described above.

According to an aspect of the present invention, there is provided a broadcast reception device, comprising: an application part operable to execute an application program; a platform part operable to execute an API for image-related and sound-related settings if the application part calls the image-related and sound-related setting API; and a function module part operable to implement a function corresponding to the API executed in the platform.

Suitably, if the image-related and sound-related setting API is a standard API defined in a specification, the application part can directly call the standard API.

Suitably, if the image-related and sound-related API is a non-standard API not defined in a specification, the application part can call a standard API operable to request a non-standard API list.

Suitably, if the application part calls the standard API, the platform part provides the non-standard API list to the application part.

Suitably, if the application part selects the non-standard API out of the list, the platform part executes the selected non-standard API.

Suitably, the platform part can include an API part operable to provide the standard API defined in a corresponding specification according to a request of the application program executed in the application part; an implementation part operable to execute an API provided by the API part, and creating and providing the non-standard API list to the application part through the API part; and a native interface part operable to interface the function module part with the implementation part.

Suitably, the application program can be a Java application program, and the standard API and the non-standard API can be a standard Java API and a non-standard Java API, respectively.

Suitably, the device can further comprise a communication interface part for selecting a certain channel and downloading an application program from the selected channel. Here, the application part may suitably install and execute the application program downloaded through the communication interface part.

Suitably, implementation part is arranged to check an API use authorization for the application program installed in the application part. Suitably, the API part is arranged to provide a list of the standard API and the non-standard API only if an application program having the API use authorization is executed in the application part.

In the exemplary embodiments as described above, the standard API may suitably comprise an API defined in one specification out of ACAP, OCAP, and MHP, and the non-standard API can include image characteristics setting API and the sound characteristics setting API.

According to another aspect of the present invention, there is provided a function setting method for a broadcast reception device, comprising (a) executing an application program; (b) executing by a platform an API for image-related and sound-related settings if the API for image-related and sound-related settings is called by the application program; and (c) performing the image-related and sound-related settings.

Suitably, the operation (b) includes, if the API for image-related and sound-related settings is a standard API defined in a certain specification, calling the standard API directly by the application program.

Suitably, the operation (b) includes, if the API for image and sound related setting is a non-standard API not defined in a certain specification, calling a standard API for requesting for a non-standard API list, by the application program.

Suitably, the operation (b) includes the platform providing a list of the non-standard API to the application program if the application program calls a standard API requesting for the non-standard API list; and executing the selected non-standard API by the platform part if the application program selects a non-standard API from the list.

The method may further comprise: (d) executing the requested standard API and providing a function corresponding to the requested standard API, by the platform part, if the application program requests a certain standard API.

The application program may suitably comprise a Java application program, and the standard API and the non-standard API may suitably comprise a standard Java API and a non-standard Java API, respectively.

Suitably, the operation (a) includes selecting a certain channel and downloading an application program from the selected channel; and installing and executing the downloaded application program.

Suitably, the method further comprises checking an API use authorization for the installed application program. Suitably, operations (b) and (d) include providing the non-standard API list and the standard API only for an application program given the API use authorization.

In the exemplary embodiments as described above, the standard API may suitably comprise an API defined in one specification of ACAP, OCAP, and MHP, and the non-standard API can include the image characteristics setting API and the sound characteristics setting API.

In this way the present invention may provide a broadcast reception device and a function setting method therefor, capable of performing image and sound-related settings.

The present invention may also provide a broadcast reception device and a function setting method therefor, which enable users to set functions corresponding to a non-standard API by providing a non-standard API list to application programs for selection in case an API for image-related and sound-related settings is a non-standard API not defined in a certain relevant specification.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIGS. 1 and 2 are block diagrams showing the configuration of a broadcast reception device according to an exemplary embodiment of the present invention; and
FIG. 3 is a flow chart illustrating a function setting method for the broadcast reception device according to an exemplary embodiment of the present invention.

Hereinafter, exemplary embodiments of the present invention will be described in detail with reference to the accompanying drawings.

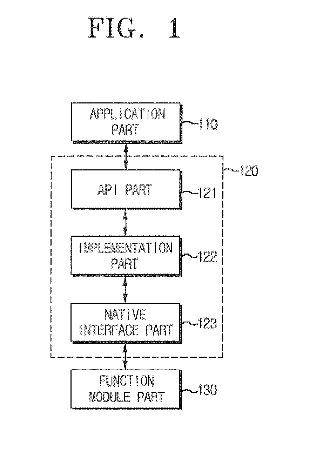

FIG. 1 is a block diagram showing the configuration of a broadcast reception device according to an exemplary embodiment of the present invention. In FIG. 1, the broadcast reception device has an application part 110, a platform part 120, and a function module part 130.

The application part 110 executes application programs. The application programs can be the programs provided by a broadcast company.

The platform part 120 executes the API called by the application program executed in the application part 110. The API is a set of functions provided for application programs.

The function module part 130 implements a function corresponding to the API executed by the platform part 120.

Referring to FIG. 1, the platform part 120 includes an API part 121, an implementation part 122, and a native interface part 123.

The API part 121 provides a standard API an application program requests for. The standard API refers to the API defined in specifications such as ACAP, OCAP, MHP, and the like.

The implementation part 122 executes the standard API provided by the API part 121. In this case, since the standard does not define various function values, variables, execution algorithms, and the like, for implementing a standard API, individual broadcast reception device makers can independently design.

In detail, in order to display a menu, the application program executed in the application part 110 calls a standard API for displaying the menu. Thus, the API part 121 provides a menu display API defined in the specification. The implementation part 122 executes the menu display API. That is, the implementation part 122 controls the function module part 130 to create and display a menu display window on the screen.

The native interface part 123 interfaces with the implementation part 122 and the function module part 130. One or more function module parts 130 are constructed, and implement the functions corresponding to the API executed by the implementation part 122.

Currently, the application part 110 and the platform part 120 used with a broadcast reception device are usually designed in the Java programming language. However, the function module part 130 mounted in the broadcast reception device is usually designed in the native programming language such as C, C++, or the like. The native interface part 123 interfaces the implementation part 122 designed in the Java language with the function module part 130 designed in a native language, so the implementation part 122 can control the function module part 130 to execute a function corresponding to the API.

The application part 110 can call an API for image-related and sound-related settings, and adjust image and sound output values. If the API for image-related and sound-related settings is a standard API defined in various specifications, the application part 110 can directly call the API for image-related and sound-related settings from the platform part 120. The platform part 120 executes the API for image-related and sound-related settings as defined in the specification.

Meanwhile, the API for image-related and sound-related settings may not be defined in the specification. In this case, an API requesting for a non-standard API list must be separately defined in the specification. Thus, a non-standard API can be called out by utilizing the defined standard API. In detail, a standard API can be defined in a form such as "getXXXList". However, a non-standard API may include APIs for image and sound characteristics settings. A list of the image characteristics setting APIs can be requested for through a standard API such as "getImageModeList", and a list of the sound characteristics setting APIs can be requested for through a standard API such as "getSoundModeList".

Thus, if the application part 110 calls "getImageModeList" or "getSoundModeList", the implementation part 122 creates a non-standard API list. Table 1 shows an example of non-standard APIs.

**[Table 1]**

| Image characteristics setting API | Sound characteristics setting API |
|---|---|
| <getImageModeList> | <getSoundModeList> |
| -SetStandardMode | -SetStandardMode |
| -SetMovieMode | -SetMovieMode |
| -SetTextMode | -SetMusicMode(pop, jazz, Rock,..) |
| -SetSportsMode | -SetSpeechMode |
| -SetCartoonMode | -SetCustomMode |
| -SetNaturalMode | ... |
| -SetCustomMode | |
| ... | |

As shown in Table 1, the image characteristics setting API can be APIs for diverse image modes, such as general mode, movie mode, text mode, sports mode, cartoon mode, natural mode, custom mode, and so on. Further, the sound characteristics setting API can be APIs for diverse sound output modes, such as general mode, movie mode, music mode, speech mode, custom mode, and so on. An appropriate image output value or a sound output value is determined and matched to each non-standard API.

The application part 110 selects a non-standard API from the list. The implementation part 122 controls the function module 130 to carry out a function corresponding to the selected non-standard API. In detail, in case "SetMovieMode" is selected, the implementation part 122 converts an output scale to be suitable to a source size, for example, 16:9, and also adjusts luminance, chrominance, white balance, and the like, to a value suitable for a movie.

Meanwhile, in case "SetMusicMode" is selected out of the sound characteristics setting APIs, it is converted into stereo outputs, and carries out a frequency equalization, so that the sound quality suitable for a music genre can be implemented.

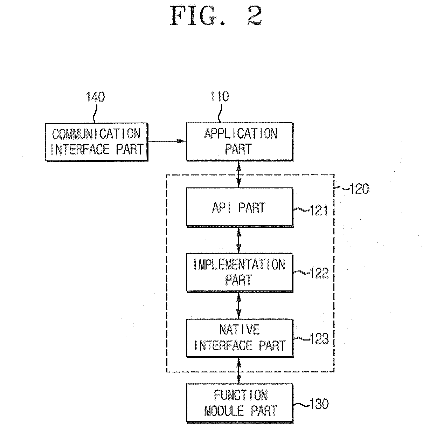

FIG. 2 shows a block diagram for showing the state of addition of a communication interface part 140 to the broadcast reception device of FIG. 1. Referring to FIG. 2, the broadcast reception includes an application part 110, a platform part 120, a function module part 130, and a communication interface part 140. Since description has been made on the functions and configurations of the application part 110, platform part 120, and function module part 130 of FIG. 2 with reference to FIG. 1, further description will be omitted for the sake of brevity.

The communication interface part 140 operates to download external application programs. In detail, the communication interface part 140 can select a certain broadcast channel, and download an application program through the selected channel.

The downloaded application program is installed and executed in the application part 110. The platform part 120 determines whether or not to give authorization to use an API to the newly installed application program. According to the MHP specification, the downloaded application program contains a Permission Request File (PRF). Thus, the platform part 120 reads the PRF and checks an authentication number and the like, and decides whether or not to give an API use authorization with respect to the corresponding application program. The API use authorization is selectively given according to a result of the decision.

If an application program given the API use authorization is executed in the application part 110, the platform part 120 executes the API called by the application program as described above. However, if an application program not given the API use authorization is executed, the platform part 120 does not execute the API even though a standard API and a non-standard API are called by the application part 110.

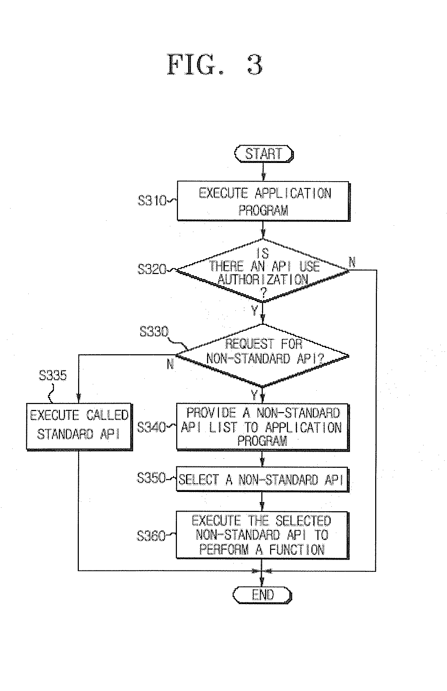

FIG. 3 is a flow chart for explaining a function setting method for the broadcast reception device according to an exemplary embodiment of the present invention. Referring to FIG. 3, if the application program is carried out (S310), it is checked whether a corresponding application program has the API use authorization (S320).

If it is decided that the API use authorization exists, it is determined whether an application program given the API use authorization calls a non-standard API (S330). If the application program calls a standard API, the platform part 120 provides and executes the called standard API (S335).

Meanwhile, if an application program given the API use authorization calls a non-standard API, a non-standard API list is provided to the application program (S340). The list can contain information on diverse kinds of APIs not defined in specifications. In this case, the application program can call a non-standard API by using a standard API, for example, getImageModeList or getSoundModeList, for calling the non-standard API.

The application program selects a non-standard API from the list provided by the platform part 120 (S350). Here, the non-standard API selection through the application program can be made by a cable service provider or a broadcast station manufacturing and uploading application programs or a broadcast reception device user.

Thus, the selected non-standard API is executed to set a corresponding function (S360). Therefore, the broadcast reception device can perform the set function. In detail, an image-related API or an sound-related API can be executed. Meanwhile, if there exists a standard API for image-related and sound-related settings, the standard API can be used for the image-related and sound-related settings to be done. As a result, the image or sound quality can be appropriately adjusted.

In the examples described above, the application program can be a Java application program coded in the Java language. Further, the standard API and the non-standard API can be a standard Java API and a non-standard Java API programmed in the Java language.

As stated above, according to exemplary embodiments of the present invention, the list of non-standard APIs not defined in specifications is provided to an application program so that the application program can set even a non-standard function. Thus, diverse functions can be efficiently used which individual broadcast reception device makers provide. In particular, since an image output characteristics value or a sound output characteristics value can be adjusted, user satisfaction can be enhanced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast reception device comprising:
an application part (110) operable to execute an application program;
a platform part (120) operable to execute an Application Program Interface (API) for image-related and sound-related settings if the application part calls an image-related and sound-related setting API; and
a function module part (130) operable to implement a function corresponding to the API executed in the platform part.

2. The device as claimed in claim 1, wherein if the image-related and sound-related setting API is a standard API defined in a predefined specification, the application part directly calls the standard API.

3. The device as claimed in claim 1, wherein if the image-related and sound-related API is a non-standard API not defined in a predefined specification, the application part calls a standard API requesting for a non-standard API list.

4. The device as claimed in claim 3, wherein if the application part (110) calls the standard API requesting for the non-standard API list, the platform part (120) provides the non-standard API list to the application part.

5. The device as claimed in claim 4, wherein if the application part (110) selects the non-standard API from the non-standard API list, the platform part (120) executes the selected non-standard API.

6. The device as claimed in claim 5, wherein the platform part (120) comprises:
an API part (121) which provides the standard API defined in the predefined specification according to a request of the application program executed in the application part;
an implementation part (122) which executes the standard API provided by the API part, and creates and provides the non-standard API list to the application part through the API part; and
a native interface part (123) which interfaces the function module part with the implementation part.

7. The device as claimed in any preceding claim, wherein the application program is a Java application program, and the standard API is a standard Java API, and the non-standard API is a non-standard Java API.

8. The device as claimed in any preceding claim further comprising:
a communication interface part (140) which selects a channel and downloads an application program from the selected channel, wherein the application part (110) installs and executes the application program downloaded through the communication interface part (140).

9. The device as claimed in claim 8, wherein the implementation part (122) checks an API use authorization for the application program installed in the application part (110), and the API part provides a list of the non-standard API and the standard API only if the application program having the API use authorization is executed in the application part (110).

10. The device as claimed in any preceding claim as dependent on claim 2, wherein the predefined specification is one of Advanced Common Application Platform, Open Cable Application Platform, and Multimedia Home Platform.

11. The device as claimed in any preceding claim as dependent on claim 3, wherein the non-standard API includes image characteristics setting API and sound characteristics setting API.

12. A function setting method for a broadcast reception device, the method comprising:
executing an application program;
executing by a platform an Application Program Interface (API) for image-related and sound-related settings if the API for image-related and sound-related settings is called by the application program; and
performing the image-related and sound-related settings.

13. The method as claimed in claim 12, wherein the executing the API comprises calling a standard API directly by the application program if the API for image-related and sound-related settings is the standard API which is defined in a predefined specification.

14. The method as claimed in claim 12 or 13, wherein the executing the API comprises calling by the application program a standard API requesting for a non-standard API list if the API for image-related and sound-related settings is a non-standard API which is not defined in a certain specification.

15. The method as claimed in claim 14, wherein the executing the API comprises:
the platform providing the non-standard API list to the application program if the application program calls the standard API requesting the non-standard API list; and
executing a selected non-standard API by the platform if the application program selects a non-standard API from the non-standard API list.

16. The method as claimed in claim 14 or 15, further comprising:
executing the requested standard API and providing a function corresponding to the requested standard API, by the platform, if the application program requests for the standard API.

17. The method as claimed in claim 14, 15 or16, wherein the application program is a Java application program, the standard API is a standard Java API, and the non-standard API is a non-standard Java API.

18. The method as claimed in claim 14, 15, 16 or 17, including controlling, by the platform, of at least one function module part and providing a function corresponding to the non-standard API selected from the non-standard API list and the standard API.

19. The method as claimed in any one of claims 12-18, wherein the executing the application program comprises:
selecting a channel and downloading the application program from the selected channel; and
installing and executing the downloaded application program.

20. The method as claimed in claim 19, further comprising checking an API use authorization for the installed application program, wherein the executing the API and the executing the requested standard API include providing the non-standard API list and the standard API only for the application program given the API use authorization.

21. The method as claimed in any one of claims 14-20, wherein the predefined specification is one of Advanced Common Application Platform, Open Cable Application Platform, and Multimedia Home Platform.

22. The method as claimed in any one of claims 14-21, wherein the non-standard API comprises image characteristics setting API and sound characteristics setting API.
